# EUROPÄISCHE PATENTSCHRIFT

(11) **EP 3 180 555 B1**
(45) Veröffentlichungstag und Bekanntmachung des Hinweises auf die Patenterteilung: **26.09.2018**
(21) Anmeldenummer: 15763191.2
(22) Anmeldetag: 10.08.2015
(51) Int. Cl.: F16L 41/06, F16L 47/34

(54) **ANBOHRARMATUR**
TAPPING FITTING
ACCESSOIRE DE PERÇAGE

(30) Priorität: 15.08.2014 DE 102014111699
(43) Veröffentlichungstag der Anmeldung: 21.06.2017
(73) Patentinhaber: Friatec GmbH, 68229 Mannheim (DE)
(72) Erfinder: ROTHERMEL, Alexander, 67487 Maikammer (DE); JUNGMANN, Georg Christian, 69517 Gorxheimertal (DE); MIKULIC, Pero, 68199 Mannheim (DE); STROBEL, Dominik, 68535 Edingen (DE); SCHATZ, Jean-Pierre, 68229 Mannheim (DE)
(74) Vertreter: Angerhausen, Christoph
(86) Internationale Anmeldenummer: PCT/DE2015/100334
(87) Internationale Veröffentlichungsnummer: WO 2016/023540

(56) Entgegenhaltungen:
- EP-A1- 1 469 246
- FR-A1- 2 591 940
- US-A- 4 606 558

## Beschreibung

Die Erfindung geht aus von einer Anbohrarmatur mit einem Sattelbauteil zum Aufsetzen auf und stoffschlüssigen Verbinden mit einem rohrförmigen Bauteil, und mit einer Spannvorrichtung zum Aufspannen des Sattelbauteils auf dem rohrförmigen Bauteil, wobei die Spannvorrichtung einen verschwenkbaren Spannhebel mit einer Gleitkontur aufweist, wobei der Spannhebel über die Gleitkontur in einer Lagerschale in einem ersten Randabschnitt des Sattelbauteils lagert, und wobei ein Spannband einerseits an dem Spannhebel beabstandet von einer Drehachse, um die der Spannhebel in der Lagerschale verschwenkbar ist, und andererseits an einem dem ersten Randabschnitt gegenüber liegenden zweiten Randabschnitt des Sattelbauteils befestigt ist, so dass bei auf einem rohrförmigen Bauteil aufgesetzter Anbohrarmatur beim Verschwenken des Spannhebels das Spannband vorgespannt und die Anbohrarmatur gegen das rohrförmige Bauteil gedrückt wird. Eine derartige Anbohrarmatur ist aus der US 4,606,558 A bekannt.

Eine gattungsgemäße Anbohrarmatur ist beispielsweise auch aus der DE 10 2009 060 410 B4 bekannt. Diese weist einen Anbohrstutzen auf, auf den eine Anbohreinheit mit einem Bohrer zum Anbohren des Rohres aufzusetzen und in einer Bohrposition zu verriegeln ist. Aus der EP 0 726 419 B1 ist eine Arbohrarmatur aus Kunststoff bekannt, welche mit einem Kunststoffrohr durch Schweißen verbindbar ist. Die Anbohrarmatur enthält einen Anbohrstutzen, durch welchen ein Bohrer geführt wird, um das Rohr anzubohren.

Die DE 10 041 840 A1 offenbart ein Anbohrgerät zum Herstellen eines Abgangs an einer mediumsführenden Rohrleitung, wobei das Anbohrgerät einen Absperrhahn umfasst. Die DE 440 57 98 C2 betrifft eine Anbohrarmatur mit einem Stutzen, in welchem ein Ventilkörper mit einer Durchgangsbohrung drehbar angeordnet ist, wobei durch die Durchgangsbohrung ein Bohrer für das Anbohren eines Rohres geführt werden kann.

Die EP 2 676 750 A1 beschreibt eine Vorrichtung zum Führen von Rohrbearbeitungsgeräten, insbesondere von Schälgeräten, wobei die Vorrichtung am Außenumfang des zu bearbeitenden Rohres anzuordnen ist und mindestens zwei parallel verlaufende Bänder aufweist. Die Bänder können Kunststoffbänder, beispielsweise faserverstärkte Kunststoffbänder, sein, welche eine hohe Flexibilität entlang ihrer Länge aufweisen beziehungsweise sich gut elastisch verformen lassen. Die Bänder können mit Hilfe eine Ratsche oder einem alternativen Spanngerät am Außenumfang der zu bearbeitenden Rohrleitung befestigt werden.

Die DE 42 395 73 A1 beschreibt eine Anbohrarmatur mit integrierter Ventilgarnitur und seitlichem Gewindeanschluss sowie einer Spanneinrichtung. Die Anbohrarmatur kann mit Hilfe eines Spannbügels auf einem Rohr aufgespannt werden, wobei der Spannbügel durch einen Querbolzen gelenkartig an einer Seite des Gehäuses befestigt ist. Auf einer gegenüberliegenden Seite des Gehäuses ist der Spannbügel mit einer T-förmigen Schraube und einer kalottenartigen Auflage am Gehäuse festgeschraubt. Eine zu der DE 42 395 73 A1 ähnliche Anbohrarmatur ist auch aus der AT 000 022 U2, aus der DE 10 2005 057 662 B4 und aus der DE 44 201 79 A1 bekannt.

Die DE 44 374 10 A1 beschreibt eine Vorrichtung zum Abdichten eines Rohrlecks, bei der eine Kompresse mit Hilfe einer Schnellspannvorrichtung an einem abzudichtenden Leck festgelegt wird. Die aus dem Stand der Technik bekannten Anbohrarmaturen haben entweder den Nachteil, dass für die Festlegung dieser an einem rohrförmigen Bauteil ein Werkzeug erforderlich ist, oder dass sie umständlich in der Handhabung sind, beziehungsweise keine sichere und positionstreue Festlegung der Anbohrarmatur an dem rohrförmigen Bauteil erlauben.

Es ist daher die Aufgabe der Erfindung, eine gattungsgemäße Anbohrarmatur derart weiter zu entwickeln, dass sie die sichere und werkzeuglose Festlegung der Anbohrarmatur an einem rohrförmigen Bauteil erlaubt und darüber hinaus einfach in der Handhabung ist.

Diese Aufgabe wird erfindungsgemäß von einer Anbohrarmatur mit den Merkmalen des Patentanspruchs 1 gelöst. Die abhängigen Ansprüche 2 bis 12 entsprechend jeweils vorteilhaften Ausführungsformen der Erfindung.

Demgemäß ist vorgesehen, dass die Gleitkontur eine exzentrische Geometrie aufweist, und die Anlagefläche zwischen Gleitkontur und Lagerschale mit zunehmender Verschwenkung in Richtung Schließstellung zunimmt, so dass der Reibschluss zwischen Gleitkontur und Lagerschale entsprechend zunimmt und maximal ist, wenn die Schließstellung erreicht ist.

Durch die exzentrische Lagerung der Aufhängung des Spannbandes an den Spannhebel wird das Spannband mit dem Verschwenken des Spannhebels aus der Offenstellung in die Schließstellung vorgespannt. Die Vorspannung des Spannbandes kann dadurch noch erhöht werden, dass die Gleitkontur des Spannhebels selbst eine Exzenterkontur und keine sphärische Kontur aufweist.

Bei einer Ausführungsform weist das Spannband an seinem dem Spannhebel zugewandten Ende einen Lagerbolzen oder dergleichen auf, der in einer Lageraufnahme des Spannhebels aufgenommen ist. Dazu kann das Spannband beispielsweise als ein Kunststoffband ausgebildet sein, das an seinem dem Spannhebel zugewandten Ende eine Öse aufweist, in die ein hakenförmiges Greifelement des Spannhebels eingreift.

Bei einer Ausführungsform der Erfindung weist der Spannhebel angrenzend an die Gleitkontur eine nutförmige Vertiefung auf, in der eine Kante des ersten Randabschnitts lagert, wenn sich der Spannhebel in einer Offenstellung befindet. Bei dieser Ausführungsform ist vorgesehen, dass sich die Schwenkbewegung des Spannhebels aus der Offenstellung in die

Schließstellung als eine zusammengesetzte Bewegung mit zwei hintereinander erfolgenden Bewegungsabschnitten zusammensetzt. In einem ersten Bewegungsabschnitt wird der Spannhebel um die Kante am ersten Randabschnitt des Sattelbauteils verschwenkt, so dass die Gleitkontur um die Kante herum in die Lagerschale am ersten Randabschnitt eingeschwenkt wird, bis die Gleitkontur in der Lagerschale lagert. Beim weiteren Verschwenken des Spannhebels setzt der zweite Bewegungsabschnitt ein, im Verlaufe welches der Spannhebel mit in der Lagerschale anliegender Gleitkontur entlang der Gleitkontur verschwenkt wird. Die Gleitkontur kann dabei eine exzentrische Geometrie aufweisen. Die Gleitkontur und die Lageraufnahme sind derart aufeinander abgestimmt, dass die Anlagefläche zwischen Gleitkontur und Lagerschale mit zunehmender Verschwenkung in Richtung Schließstellung zunimmt, so dass der Reibschluss zwischen Gleitkontur und Lagerschale entsprechend zunimmt und maximal ist, wenn die Schließstellung erreicht ist. Die Änderung der Exzentrizität der Gleitkontur kann mit wachsendem Verschwenkwinkel, das heißt mit zunehmender Annäherung an die Schließposition, abnehmen, so dass mit steigender Vorspannung des Spannbands die Hebelwirkung des Spannhebels zunimmt und damit auch bei Annäherung an die Schließstellung noch eine Verschwenkung des Spannhebels mit akzeptablem Kraftaufwand möglich ist.

Bei einer Ausführungsform der Erfindung weist die Gleitkontur des Spannhebels daher in der Offenstellung einen Abstand zu der Lagerschale auf, so dass die Gleitkontur erst nach dem Verschwenken des Spannhebels um ein bestimmtes Winkelmaß um die Kante aus der Offenstellung in Richtung einer Schließstellung in der Lagerschale lagert, das heißt mit der Lagerschale in Kontakt tritt.

Vorzugsweise sind dabei die Kante, die nutförmige Vertiefung, die Lagerschale und die Gleitkontur derart aufeinander abgestimmt, dass der Spannhebel beim weiteren Verschwenken um ein über das bestimmte Winkelmaß hinausgehendes Winkelmaß von der Kante abgehoben wird, so dass der Spannhebel eine Schwenkbewegung um die Gleitkontur in der Lagerschale ausführt.

Um den Spannhebel in der Schließstellung zu sichern, kann dieser in der Schließstellung eine Rastposition einnehmen. In dieser eine Endposition der Bewegung des Spannhebels darstellenden Schließposition kann vorgesehen sein, dass dem Benutzer eine akustische Rückkoppelung über das Erreichen der Endposition gegeben wird. Bei einer besonders bevorzugten Ausführungsform wird der Spannhebel in der Schließstellung über eine Vorspannung des Spannbands in die Lagerschale gedrückt, so dass der Spannhebel aufgrund des Reibungswiderstandes zwischen der Lagerschale und der Gleitkontur eine Selbsthemmung aufweist und dadurch in der Schließposition gegenüber ungewolltem Zurückschwenken in die Offenposition gesichert ist.

Vorzugsweise wird die Bereitstellung des Anpressdrucks, mit dem das Sattelbauteil an dem rohrförmigen Bauteil festgelegt ist, durch eine Vorspannung bereitgestellt, die durch eine Dehnung des Spannbands erzeugt wird. In einem gewissen, begrenzten Rahmen kann jedoch auch das Sattelbauteil, insbesondere dann, wenn es aus einem Kunststoffmaterial besteht, an seinen beiden Randabschnitten, an denen das Spannband befestigt ist, eine Dehnung aufnehmen und damit eine Vorspannung bereitstellen.

Bei der bevorzugten Ausführungsform wird die Vorspannung jedoch durch das Verspannen des Spannbandes im Zuge des Verschwenkens des Spannhebels von der Offenstellung in die Schließstellung bereitgestellt. Dabei kann das Spannband zwischen einer Offenstellung und einer Schließstellung, in der das Spannband ein rohrförmiges Bauteil umspannt, eine Dehnung von bis zu 10% und vorzugsweise zwischen 1% und 8% aufweisen. Grundsätzlich ist je nach verarbeitetem Durchmesser des rohrförmigen Bauteils eine andere Dehnung des Spannbandes erforderlich, um eine nach theoretischen Gesichtspunkten optimale Anpresskraft des Sattelbauteils auf dem rohrförmigen Bauteil bereitzustellen. Untersuchungen haben jedoch ergeben, dass für die gängigen Rohrdurchmesser durchaus standardisierte Spannbänder verwendet werden können, die eine mittlere Dehnung im Bereich zwischen 1% und 8% und vorzugsweise 6 % aufweisen. Die sich dabei in der Praxis ergebenden Abweichungen des tatsächlichen Anpressdrucks von einem Idealwert sind jedoch so gering, dass beim Schweißen immer noch eine stoffschlüssige Verbindung zwischen Sattelbauteil und rohrförmigem Bauteil mit hoher Qualität sichergestellt werden kann.

Bei einer Ausführungsform der Erfindung weist das Spannband ein Kunststoffmaterial auf, das die Dehnung bereitstellt, wobei das Kunststoffmaterial vorzugsweise ein Polyethylen, ein Polypropylen oder ein Polyamid ist.

Nach erfolgter Verschweißung des Sattelbauteils mit dem rohrförmigen Bauteil ist die Spannvorrichtung in der Regel funktionslos. Um dann ein einfaches Demontieren der Spannvorrichtung von der Anbohrarmatur zu ermöglichen, ist bei einer Ausführungsform der Erfindung vorgesehen, dass das Spannband an dem zweiten Randabschnitt lösbar montiert ist, so dass nach erfolgter Stoffschlüssiger Verbindung des Sattelbauteils mit dem rohrförmigen Bauteil der Spannhebel mit dem Spannband von der Anbohrarmatur entfernt werden kann.

Um ein Überspannen der Spannvorrichtung und insbesondere des Spannbandes zu vermeiden, ist bei einer Ausführungsform der Erfindung vorgesehen, dass der Spannhebel in der Offenstellung und/oder in der Schließstellung an einem Anschlag anliegt.

Um eine Anpassung der Spannvorrichtung an den Durchmesser des zu verarbeitenden rohrförmigen Bauteils zu ermöglichen, ist bei einer Ausführungsform der Erfindung vorgesehen, dass der Spannhebel auswechselbar montiert ist, so dass durch Auswechseln des Spannhebels gegen einen Spannhebel mit sich unterscheidender Gleitkontur abhängig von einem Durchmesser eines rohrförmigen Bauteils ein bestimmter Spannhub bereitgestellt werden kann. Die Gleitkonturen der unterschiedlichen Spannhebel unterscheiden sich dabei insbesondere hinsichtlich ihrer Exzentrizität.

Zur Verbesserung des Bedienungskomforts der erfindungsgemäßen Anbohrarmatur und zur Verringerung des Bauteilaufwandes ist bei einer Ausführungsform der Erfindung der Spannhebel zweiteilig ausgebildet, mit einem Basisteil, dass die Gleitkontur aufweist und mit dem Spannband verbunden ist, und mit einem Hebel- und Griffteil, das über eine lösbare Verbindung mit dem Basisteil verbunden ist.

Weitere Einzelheiten der Erfindung werden anhand der nachstehenden Figuren erläutert. Dabei zeigt:
- Figur 1: eine erste Ausführungsform der erfindungsgemäßen Anbohrarmatur im auf ein rohrförmiges Bauteil aufgesetzten Zustand;
- Figur 2: eine Detailansicht der Spannvorrichtung der Ausführungsform gemäß Figur 1; und
- Figuren 3-6a: eine zweite Ausführungsform der erfindungsgemäßen Anbohrarmatur in verschiedenen Winkelstellungen des Spannhebels und jeweils mit Detailansicht der Spannvorrichtung.

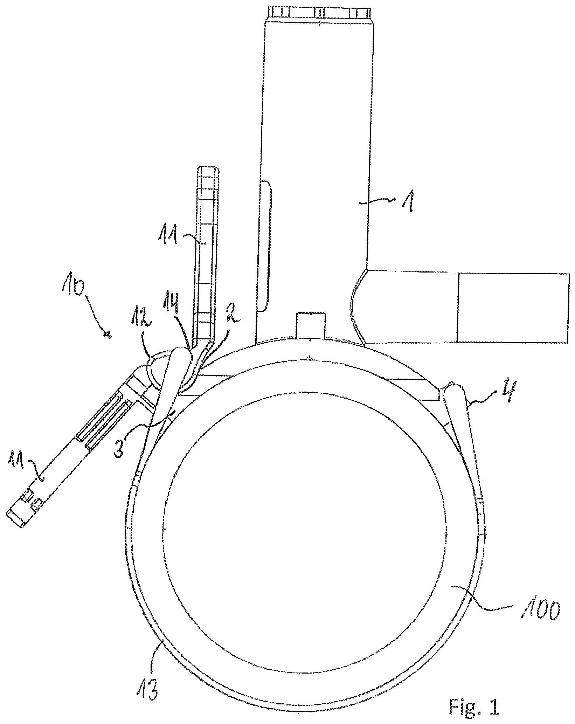

Die Figur 1 zeigt eine erste Ausführungsform der erfindungsgemäßen Anbohrarmatur, die auf einem rohrförmigen Bauteil 100 aufgesetzt ist. Die Spannvorrichtung 10 weist einen Spannhebel 11 auf, der in der Darstellung gemäß Figur 1 einmal in der unteren Offenstellung und einmal in der oberen Schließstellung dargestellt ist. Der Spannhebel 11 weist eine Gleitkontur 12 auf, die in einer Lagerschale 2 im Randbereich 3 des Sattelbauteils 1 lagert. Die Gleitkontur 12 ist nicht-sphärisch ausgebildet und weist eine Exzentrizität auf. Darüber hinaus ist das Spannband 13 exzentrisch zu einer Drehachse des Spannhebels 11 an dem Spannhebel 11 festgelegt. Das Spannband 13 kann beispielsweise in eine Lageraufnahme 14 des Spannhebels 11 eingesetzt sein.

Das Spannband 13 erstreckt sich somit von dem Spannhebel 11 um einen unteren, von dem Sattelbauteil 1 abgewandten Umfangsbereich des Bauteils 100 herum bis zu einem dem ersten Randabschnitt 3 gegenüberliegenden zweiten Randabschnitt 4 des Sattelbauteils 1, wobei das Spannband 13 an dem zweiten Randbereich 4 festgelegt ist.

Mit dem Verschwenken des Spannhebels 11 aus der unteren Offenstellung in die obere Schließstellung wird das Spannband 13 aufgrund der Exzentrizität der Gleitkontur 12 beziehungsweise der Lageraufnahme 14 des Spannbandes 13 vorgespannt. Die Vorspannung wird durch eine Dehnung des Spannbandes 13 bereitgestellt. In der oberen Schließstellung stellt ein Reibungswiderstand zwischen der Gleitkontur 12 und der Lagerschale 2 eine Selbsthemmung des Spannhebels 11 bereit, so dass der Spannhebel 11 in der oberen Schließstellung festgelegt ist.

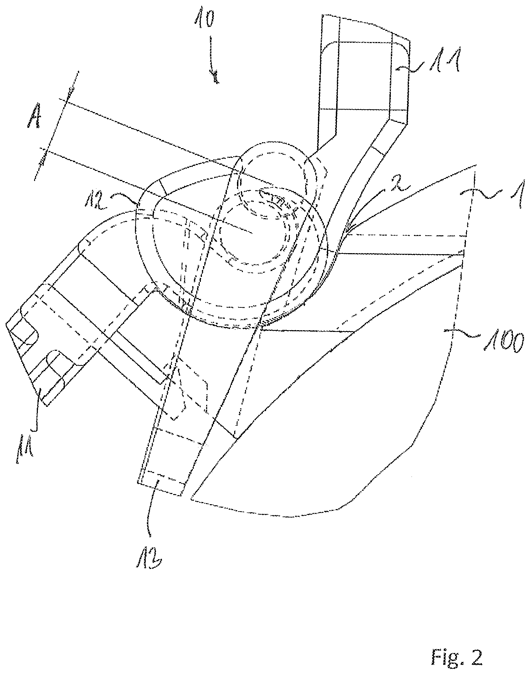

In Figur 2 ist die Spannvorrichtung 10 im Detail gezeigt. Zur besseren Veranschaulichung ist wiederum der Spannhebel 11 sowohl in der Offenstellung (unten links) als auch in der Schließstellung (oben rechts) gezeigt. Mit dem Buchstaben A ist gerade der Spannhub gekennzeichnet, den das an dem Spannhebel 11 festgelegte Ende des Spannbandes 13 mit dem Verschwenken des Spannhebels 11 aus der Offenstellung in die Schließstellung erfährt. Der Spannhub ist gerade ein Maß für die Dehnung, die das Spannband 13 erfährt. Die Dehnung ist wiederum proportional zu der Vorspannung des Spannbandes 13 und damit zu dem Anpressdruck, mit dem das rohrförmige Bauteil 100 an das Sattelbauteil 1 angepresst wird. Der Spannhub A kann daher so abgestimmt sein, dass in der Schließstellung des Spannhebels 11 ein für die Herstellung einer stoffschlüssigen Verbindung zwischen dem Sattelbauteil 1 und dem rohrförmigen Bauteil 100, beispielsweise unter Verwendung der Heizwendelschweißtechnik, erforderlicher Anpressdruck bereitgestellt ist. Der Spannhub A kann gerade durch das Maß der Exzentrizität der Gleitkontur 12 in der Schließstellung des Spannhebels vorgegeben werden.

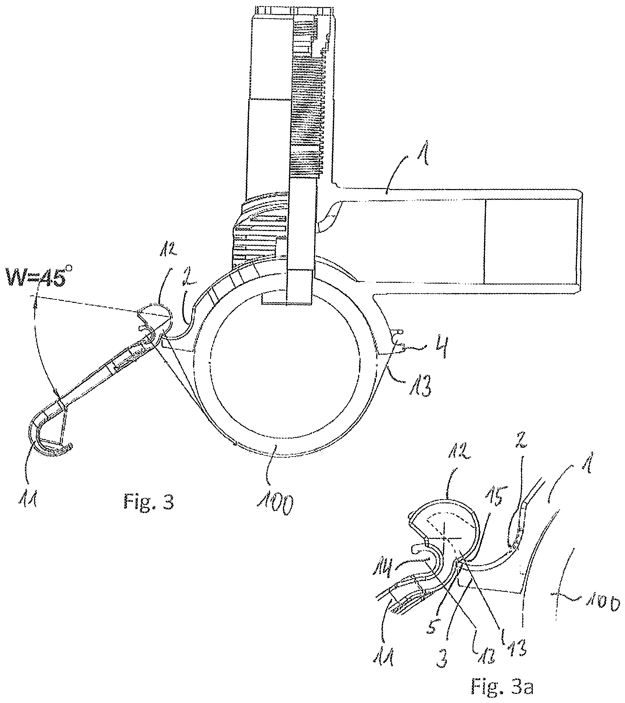

In den Figuren 3 und 3a ist eine weitere Ausführungsform der erfindungsgemäßen Anbohrarmatur in der Offenstellung des Spannhebels 11 dargestellt. In der Offenstellung ist der Spannhebel 11 um ein Winkelmaß von 45° aus der Lagerschale 2 herausgeschwenkt, das heißt, erst mit dem Verschwenken des Spannhebels 11 um die genannten 45° aus der dargestellten Offenstellung in Richtung der Schließstellung tritt die Gleitkontur 12 mit der Lagerschale 2 in Kontakt. Über den Verlauf dieser Schwenkbewegung steht der Spannhebel 11 über die nutförmige Vertiefung 15 angrenzend an die Gleitkontur 12 mit einer Lagerkante 5 an der äußeren Berandung des ersten Randabschnitts 3 des Sattelbauteils 1 in Verbindung. Die Kante 5 bildet somit gerade eine Lager- und Schwenkkante, um die der Schwenkhebel 11 während der Schwenkbewegung um die ersten 45° aus der dargestellten Offenstellung in Richtung der Schließstellung herum verschwenkt wird.

Die Lageraufnahme 14, in der das Spannband 13 an dem Spannhebel 11 festgelegt ist, ist exzentrisch zu dem aus Lagerkante 5 und nutförmiger Vertiefung 15 gebildeten Drehpunkt angeordnet, so dass das Spannband 13 bereits mit dem Verschwenken der genannten ersten 45° aus der Offenstellung in Richtung der Schließstellung eine erste Vorspannung erfährt.

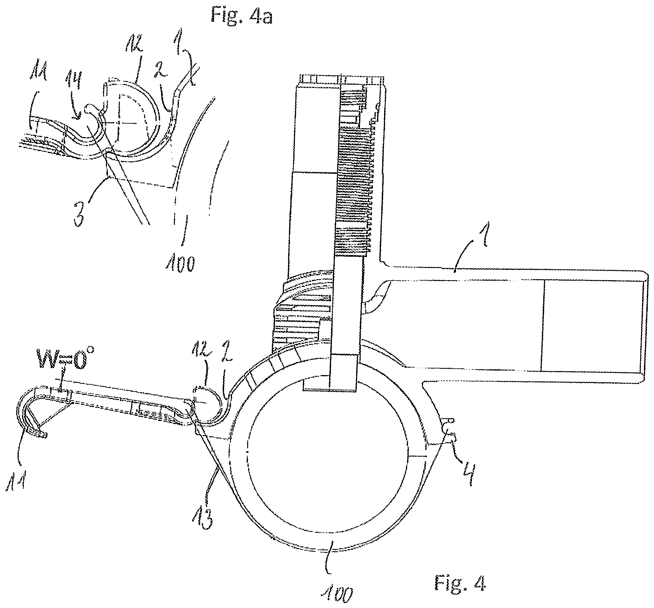

Wie in den Figuren 4 und 4a dargestellt ist, tritt die Gleitkontur 12, nachdem der Spannhebel 11 um 45° aus der Offenstellung in Richtung der Schließstellung verschwenkt worden ist, mit der Lagerschale 2 des Sattelbauteils 1 in einem an die Lagerkante 5 angrenzenden Bereich in Kontakt. Die Gleitkontur 12 steht jedoch in der dargestellten Winkelposition des Spannhebels 11 erst über einen vergleichsweise geringen Teilbereich ihrer Länge mit der Lagerschale 2 in Kontakt (siehe Figur 4a).

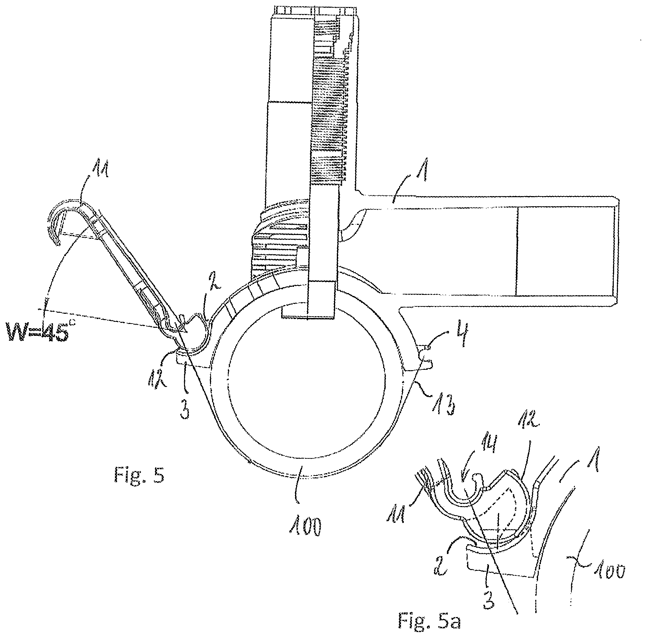

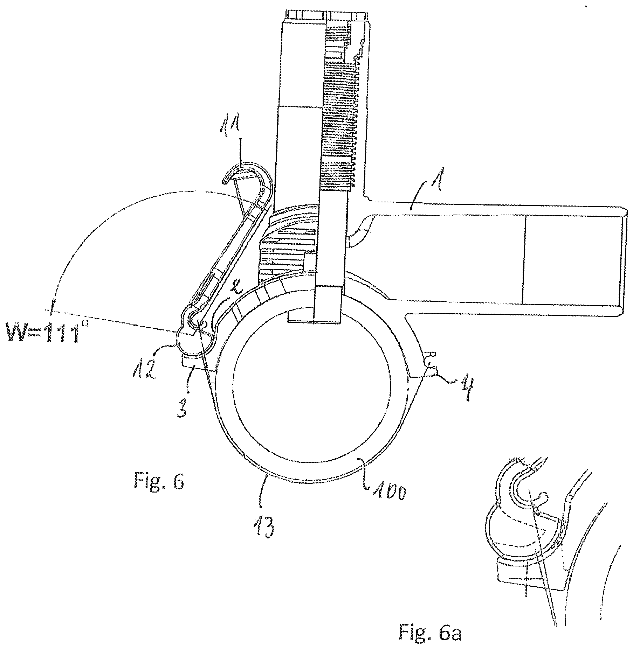

Erst mit dem weiteren Verschwenken des Schwenkhebels aus der in den Figuren 4 und 4a dargestellten Stellposition in Richtung der Schließstellung tritt die Gleitkontur 12 mit der Lagerschale 2 zunehmend großflächiger in Kontakt (siehe Figuren 5 und 5a), um schließlich in der in den Figuren 6 und 6a dargestellten Schließposition einen maximalen Flächenkontakt zwischen der Gleitkontur 12 und Lagerschale 2 aufzuweisen. In der in den Figuren 6 und 6a dargestellten Schließposition erzeugt die Vorspannung des Spannbandes 13 gerade einen Reibschluss zwischen der Gleitkontur 12 und der Lagerschale 2, so dass der Spannhebel 11 in der Schließposition eine Selbsthemmung aufweist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Sattelbauteil
- 2: Lagerschale
- 3: erster Randabschnitt
- 4: zweiter Randabschnitt
- 5: Kante
- 10: Spannvorrichtung
- 11: Spannhebel
- 12: Gleitkontur
- 13: Spannband
- 14: Lageraufnahme
- 15: nutförmige Vertiefung
- 100: rohrförmiges Bauteil

## Patentansprüche

1. Anbohrarmatur, mit einem Sattelbauteil (1) zum Aufsetzen auf und stoffschlüssigen Verbinden mit einem rohrförmigen Bauteil (100), und mit einer Spannvorrichtung (10) zum Aufspannen des Sattelbauteils (1) auf dem rohrförmigen Bauteil, wobei die Spannvorrichtung (10) einen verschwenkbaren Spannhebel (11) mit einer Gleitkontur (12) aufweist, wobei der Spannhebel (11) über die Gleitkontur (12) in einer Lagerschale (2) in einem ersten Randabschnitt (3) des Sattelbauteils (1) lagert, und wobei ein Spannband (13) einerseits an dem Spannhebel (11) beabstandet von einer Drehachse, um die der Spannhebel (11) in der Lagerschale (2) verschwenkbar ist, und andererseits an einem dem ersten Randabschnitt (3) gegenüber liegenden zweiten Randabschnitt (4) des Sattelbauteils (1) befestigt ist, so dass bei auf einem rohrförmigen Bauteil (100) aufgesetzter Anbohrarmatur beim Verschwenken des Spannhebels (11) das Spannband (13) vorgespannt und die Anbohrarmatur gegen das rohrförmige Bauteil (100) gedrückt wird, **dadurch gekennzeichnet, dass** die Gleitkontur eine exzentrische Geometrie aufweist, und die Anlagefläche zwischen Gleitkontur und Lagerschale mit zunehmender Verschwenkung in Richtung Schließstellung zunimmt, so dass der Reibschluss zwischen Gleitkontur und Lagerschale entsprechend zunimmt und maximal ist, wenn die Schließstellung erreicht ist.

2. Anbohrarmatur nach Anspruch 1, bei der das Spannband (13) an seinem dem Spannhebel (11) zugewandten Ende einen Lagerbolzen aufweist, der in einer Lageraufnahme (14) des Spannhebels (11) aufgenommen ist.

3. Anbohrarmatur nach Anspruch 1 oder 2, bei der der Spannhebel (11) angrenzend an die Gleitkontur (12) eine nutförmige Vertiefung (15) aufweist, in der eine Kante (5) des ersten Randabschnitts (3) lagert, wenn sich der Spannhebel (11) in einer Offenstellung befindet.

4. Anbohrarmatur nach Anspruch 3, bei der die Gleitkontur (12) des Spannhebels (11) in der Offenstellung einen Abstand zu der Lagerschale (2) aufweist, so dass die Gleitkontur (12) nach dem Verschwenken des Spannhebels (11) um ein bestimmtes Winkelmaß um die Kante (5) aus der Offenstellung in Richtung einer Schließstellung in der Lagerschale (2) lagert.

5. Anbohrarmatur nach Anspruch 4, bei der die Kante (5), die nutförmige Vertiefung (15), die Lagerschale (2) und die Gleitkontur (12) derart aufeinander abgestimmt sind, dass der Spannhebel (11) beim weiteren Verschwenken um ein über das bestimmte Winkelmaß hinaus gehendes Winkelmaß von der Kante (5) abgehoben ist, so dass der Spannhebel (11) eine Schwenkbewegung um die Gleitkontur (12) in der Lagerschale (2) ausführt.

6. Anbohrarmatur nach einem der vorangegangen Ansprüche, bei der der Spannhebel (11) in einer Schließstellung über eine Vorspannung des Spannbands (13) in die Lagerschale (2) gedrückt ist, so dass der Spannhebel. (11) aufgrund eines Reibungswiderstands zwischen der Lagerschale (2) und der Gleitkontur (12) eine Selbsthemmung aufweist.

7. Anbohrarmatur nach einem der vorangegangen Ansprüche, bei der das Spannband (13) zwischen einer Offenstellung und einer Schlicßstellung, in der das Spannband (13) ein rohrförmiges Bauteil (100) umspannt, eine Dehnung von bis zu 10%, vorzugsweise zwischen 1% und 8% und besonders bevorzugt von 6 % aufweist.

8. Anbohrarmatur nach Anspruch 7, bei der das Spannband (13) ein Kunststoffmaterial aufweist, das die Dehnung bereitstellt, wobei das Kunststoffmaterial vorzugsweise ein Polyethylen, ein Polypropylen oder ein Polyamid ist.

9. Anbohrarmatur nach einem der vorangegangen Ansprüche, bei der das Spannband (13) an dem zweiten Randabschnitt (4) lösbar montiert ist, so dass nach erfolgter stoffschlüssiger Verbindung des Sattelbauteils (1) mit dem rohrförmigen Bauteil (100) der Spannhebel (11) mit dem Spannband (13) von der Anbohrarmatur entfernt werden kann.

10. Anbohrarmatur nach einem der vorangegangen Ansprüche, bei der der Spannhebel (11) in der Offenstellung und/oder in der Schließstellung an einem Anschlag anliegt.

11. Anbohrarmatur nach einem der vorangegangen Ansprüche, bei der der Spannhebel (11) auswechselbar montiert ist, so dass durch Auswechseln des Spannhebels (11) gegen einen Spannhebel (11) mit sich unterscheidender Gleitkontur (12) abhängig von einem Durchmesser eines rohrförmigen Bauteils (100) ein bestimmter Spannhub bereitgestellt werden kann.

12. Anbohrarmatur nach einem der vorangegangen Ansprüche, bei der der Spannhebel (11) zweiteilig ausgebildet ist, mit einem Basisteil, das die Gleitkontur (12) aufweist und mit dem Spannband (13) verbunden ist, und mit einem Hebel- und Griffteil, das über eine lösbare Verbindung mit dem Basisteil verbunden ist.

## Claims

1. A tapping fitting, having a saddle component (1) for positioning on and cohesively connecting to a tubular component (100), and having a clamping device (10) for clamping the saddle component (1) on the tubular component, wherein the clamping device (10) has a tiltable clamping lever (11) with a sliding profile (12), wherein the clamping lever (11) is mounted via the sliding profile (12) in a bearing shell (2) in a first peripheral portion (3) of the saddle component (1), and wherein a clamping band (13) is fastened on one side to the clamping lever (11) at a distance from a rotation axis about which the clamping lever (11) is tiltable in the bearing shell (2), and on the other side to a second peripheral portion (4), located opposite the first peripheral portion (3) of the saddle component (1), such that, when the tapping fitting is positioned on a tubular component (100), when the clamping lever (11) is tilted, the clamping band (13) is biased and the tapping fitting is pressed against the tubular component (100), **characterized in that** the sliding profile (12) has an offset geometry, and the contact surface between the sliding profile (12) and the bearing shell (2) increases by progressively increasing the tilting in the direction of the closed position, so that the frictional coupling between the sliding profile (12) and the bearing shell (2) correspondingly increases and reaches its maximum when the closed position has been reached.

2. The tapping fitting according to claim 1, wherein the clamping band (13) is provided with a support pin on its end facing the clamping lever (11), which is housed within a support housing (14) of the clamping lever (11).

3. The tapping fitting according to claim 1 or 2, wherein the clamping lever (11) is provided with a groove-like recess (15) adjacent to the sliding profile (12), in which an edge (5) of the first peripheral portion (3) is supported, when the clamping lever (11) is in an open position..

4. The tapping fitting according to claim 3, wherein the sliding profile (12) of the clamping lever (11) in the open position is distanced from the bearing shell (2), such that the sliding profile (12) after tilting of the clamping lever (11) is moved by a certain angle around the edge (5) from the open position to the closed position, in the bearing shell (2).

5. The tapping fitting according to claim 4, wherein the edge (5), the groove-like recess (15), the bearing shell (2) and the sliding profile (12) are mutually adapted to each other in such a way that the clamping lever (11), in case of further tilting by an angle exceeding the predetermined angle, is lifted from the edge (5), so that the clamping lever (11) performs a tilting movement around the sliding profile (12) of the bearing shell (2).

6. The tapping fitting according to one of the preceding claims, wherein the clamping lever (11) in a closed position is pressed in the bearing shell (2) by a biasing of the clamping band (13), so that the clamping lever (11), due to a frictional resistance between the bearing shell (2) and the sliding profile (12), is provided with a self-locking mechanism.

7. The tapping fitting according to one of the preceding claims, wherein the clamping band (13), between an open position and a closed position, in which the clamping band (13) grippingly surrounds a tubular component (100), has an extension of up to 10%, preferably between 1% and 8% and particularly preferably equal to 6%.

8. The tapping fitting according to claim 7, wherein the clamping band (13) is made of a plastic material, which provides the extension, wherein the plastic material preferably is a polyethylene, a polypropylene or a polyamide.

9. The tapping fitting according to one of the preceding claims, wherein the clamping band (13) is removably mounted on the second peripheral portion (4), so that after completion of the cohesive connection of the saddle component (1) to the tubular component (100) the clamping lever (11) may be removed from the tapping fitting together with the clamping band (13).

10. The tapping fitting according to one of the preceding claims, wherein the clamping lever (11), in the open and/or closed position, contacts an abutment.

11. The tapping fitting according to one of the preceding claims, wherein the clamping lever (11) is mounted in a replaceable way, so that by replacing the clamping lever (11) with a clamping lever (11) with a different sliding profile (12), according to the diameter of a tubular component (100), a defined clamping stroke may be provided.

12. The tapping fitting according to one of the preceding claims, wherein the clamping lever (11) is formed in two parts, with a basis part, which has the sliding profile (12) and which is connected to the clamping band (13), and with a lever and gripping part, which is connected to the basis part by means of a removable connection.

## Revendications

1. Selle de prise en charge avec un composant de selle (1) pour la pose et la liaison par liaison de matière avec un composant tubulaire (100) et avec un dispositif de serrage (10) pour le serrage du composant de selle (1) sur le composant tubulaire, le dispositif de serrage (10) comprenant un levier de serrage pivotant (11) avec un contour de glissement (12), le levier de serrage (11) étant logé, par l'intermédiaire du contour de glissement (12), dans une coque de palier (2) dans une première portion de bord (3) du composant de selle (1) et une bande de serrage (13) étant fixé d'une part au levier de serrage (11), à une certaine distance d'un axe de rotation, autour duquel le levier de serrage (11) peut pivoter dans la coque de palier (2) et d'autre part à une deuxième portion de bord (4) du composant de selle (1), opposée à la première portion de bord (3), de façon à ce que, lorsque la selle de prise en charge est posée sur un composant tubulaire (100), lors du pivotement du levier de serrage (11), la bande de serrage (13) est précontrainte et la selle de prise en charge est comprimée contre le composant tubulaire (100), **caractérisée en ce que** le contour de glissement présente une géométrie excentrique et la surface d'appui entre le contour de glissement et la coque de palier augmente lorsque le pivotement en direction de la position de fermeture augmente, de façon à ce que la friction entre le contour de glissement et la coque de palier augmente en conséquence et soit maximal lorsque la position de fermeture est atteinte.

2. Selle de prise en charge selon la revendication 1, dans laquelle la bande de serrage (13) comprend, au niveau de son extrémité orientée vers le levier de serrage (11), un axe de palier qui est logé dans un logement de palier (14) du levier de serrage (11).

3. Selle de prise en charge selon la revendication 1 ou 2, dans laquelle le levier de serrage (11) comprend, près du contour de glissement (12), une cavité (15) en forme de noix, dans laquelle une arête (5) de la première portion de bord (3) se loge lorsque le levier de serrage (11) se trouve dans une position d'ouverture.

4. Selle de prise en charge selon la revendication 3, dans laquelle le contour de glissement (12) du levier de serrage (11) présente, dans la position d'ouverture, une distance par rapport à la coque de palier (2), de façon à ce que le contour de glissement (12) se loge dans la coque de palier (2), après le pivotement du levier de serrage (11) autour d'un angle déterminé autour de l'arête (5), de la position d'ouverture vers une position de fermeture.

5. Selle de prise en charge selon la revendication 4, dans laquelle l'arête (5), la cavité (15) en forme de noix, la coque de palier (2) et le contour de glissement (12) sont adaptés entre eux de façon à ce que le levier de serrage (11) soit soulevé, lors d'un pivotement ultérieur d'un angle au-delà de l'angle déterminé, par l'arête (5) de façon à ce que le levier de serrage (11) effectue un mouvement de pivotement autour du contour de glissement (12) dans la coque de palier (2).

6. Selle de prise en charge selon l'une des revendications précédentes, dans laquelle le levier de serrage (11) est comprimé, dans une position de fermeture, par l'intermédiaire d'une précontrainte de la bande de serrage (13), dans la coque de palier (2), de façon à ce que le levier de serrage (11) présente un auto-blocage du fait d'une friction entre la coque de palier (2) et le contour de glissement (12).

7. Selle de prise en charge selon l'une des revendications précédentes, dans laquelle la bande de serrage (13) présente, entre une position d'ouverture et une position de fermeture, dans laquelle la bande de serrage (13) entoure un composant tubulaire (100), une dilatation jusqu'à 10 %, de préférence entre 1 % et 8 %, de préférence de 6 %.

8. Selle de prise en charge selon la revendication 7, dans laquelle la bande de serrage (13) comprend une matière plastique qui permet la dilation, la matière plastique étant de préférence un polyéthylène, un polypropylène ou un polyamide.

9. Selle de prise en charge selon l'une des revendications précédentes, dans laquelle la bande de serrage (13) est montée sur la deuxième portion de bord (4) de manière amovible de façon à ce que, une fois la liaison par liaison de matière du composant de selle (1) avec le composant tubulaire (100), le levier de serrage (22) puisse être retiré de la selle de prise en charge avec la bande de serrage (13).

10. Selle de prise en charge selon l'une des revendications précédentes, dans laquelle le levier de serrage (11) s'appuie, dans la position d'ouverture et/ou dans la position de fermeture, contre une butée.

11. Selle de prise en charge selon l'une des revendications précédentes, dans laquelle le levier de serrage (11) est monté de manière interchangeable de façon à ce que le remplacement du levier de serrage (11) par un levier de serrage (11) avec un contour de glissement (12) différent permette d'effectuer une course de serrage déterminée en fonction d'un diamètre d'un composant tubulaire (100).

12. Selle de prise en charge selon l'une des revendications précédentes, dans laquelle le levier de serrage (11) est constitué de deux parties, avec une partie de base, qui comprend le contour de glissement (12) et qui est reliée avec la bande de serrage (13), et avec une partie de levier et de poignée qui est reliée avec la partie de base par l'intermédiaire d'une liaison amovible.
